# EUROPÄISCHE PATENTSCHRIFT

(11) **EP 0 563 628 B1**
(45) Veröffentlichungstag und Bekanntmachung des Hinweises auf die Patenterteilung: **11.09.1996**
(21) Anmeldenummer: 93103657.8
(22) Anmeldetag: 08.03.1993
(51) Int. Cl.: C02F 1/04, B01D 3/00, B01D 3/10, B01D 3/42, B01D 5/00

(54) **Verfahren und Einrichtung zum Aufbereiten von Prozessabwasser mittels Vakuumdestillation mit indirekter Wärmerückgewinnung**
Process and device for treating water effluents by vacuum distillation with indirect heat recuperation
Procédé et dispositif de traitement des effluents acqueux par une distillation à vacuum avec recupération de chaleur indirecte

(30) Priorität: 30.03.1992 CH 1002/92
(43) Veröffentlichungstag der Anmeldung: 06.10.1993
(73) Patentinhaber: MEIER, René, CH-6005 Luzern (CH)
(72) Erfinder: MEIER, René, CH-6005 Luzern (CH)
(74) Vertreter: Blöchle, Hans

(56) Entgegenhaltungen:
- DE-A- 3 147 460
- DE-A- 3 618 460
- DE-A- 3 727 164

## Beschreibung

Verfahren und Einrichtung zum Aufbereiten von Prozessabwasser mittels Vakuumdestillation mit indirekter Wärmerückgewinnung, wobei unter Vakuum mittels einem Siedevorgang das Prozessabwasser in Eindampfungsrückstände und in Brüden aufgetrennt wird und der Aggregatzustand der Brüden durch Wärmeentzug von gasförmig auf flüssig geändert wird und die dabei frei werdende Wärme mittels einem Wärmeträger dem Prozessabwasser zugeführt wird.

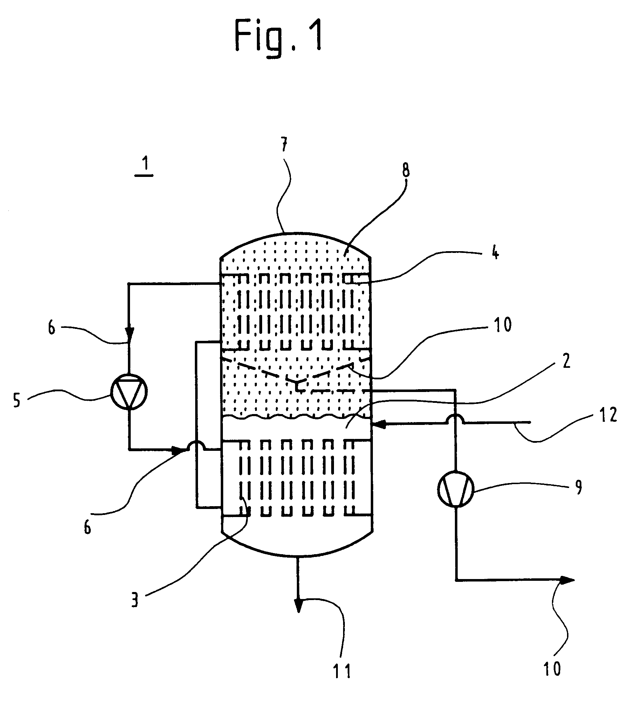

In Fig. 1 ist ein den Stand der Technik bildender Vakuumdestillator 1 mit Wärmerückgewinnung zur Aufbereitung von aus beispielsweise photochemischen Prozessen anfallendem Prozessabwasser 2 dargestellt, der verfahrenstechnisch der Offenlegungsschrift DE-A-3 618 460 entspricht. Ein geschlossenes Gefäss 7 des Vakuumdestillators 1 weist im unteren Teil einen ersten Wärmetauscher 3 und im oberen Teil einen zweiten Wärmetauscher 4 auf. Die Wärmetauscher 3;4 sind mit einem Kompressor 5 und Leitungen so verbunden, dass ein geschlossener Kreislauf gebildet wird, in dem ein Wärmeträger 6, beispielsweise Freon als leichtverflüssigendes Druckgas zirkuliert. Der erste Wärmetauscher 3 ist vollkommen in das Prozessabwasser 2 eingetaucht, der zweite Wärmetauscher 4 wird von Brüden 8 des siedenden Prozessabwassers 2 durchströmt. Das durch eine erste Vakuumpumpe 9 erzeugte Vakuum im oberen Teil des Gefässes 7 bewirkt im Prozessabwasser 2 einen Siedevorgang bei oberhalb Zimmertemperatur liegenden Temperaturen, wobei die Brüden 8 Wärme an den zweiten Wärmetauscher 4 abgeben und dabei in flüssiger Form von einer Auffangschale 10 aufgenommen werden und von der ersten Vakuumpumpe 9 gegen Atmosphäre verdichtet werden. Die aus beispielsweise Wasser und niedersiedenden Stoffen bestehenden Brüden 8 werden über die Vakuumpumpe 9 und einen zweiten Auslass 10 ausgetragen. Am Boden des Gefässes 7 ist zur Austragung der Eindampfungsrückstände ein erster Auslass 11 vorgesehen. Das Prozessabwasser 2 gelangt über einen ersten Einlass 12 in das geschlossene Gefäss 7. Der im geschlossenen Kreislauf zirkulierende Wärmeträger 6 ändert im zweiten Wärmetauscher 4 seinen Aggregatzustand von flüssig auf gasförmig und entzieht dabei den Brüden 8 Wärme, die als Verdampfungswärme dem Wärmeträger 6 inhärent ist. Anschliessend verdichtet der Kompressor 5 den Wärmeträger 6 gegen Überdruck. Im ersten Wärmetauscher 3 ändert der Aggregatzustand des Wärmeträgers 6 von gasförmig auf flüssig und gibt dabei die beim Verdampfungsvorgang aufgenommene Wärme an das Prozessabwasser 2 ab.

Ein Nachteil der bekannten Einrichtung liegt darin, dass die durch den Kompressor, Wärmetauscher und Wärmeträger gebildete, im Überdruckbereich arbeitende Wärmepumpe hohe Energiekosten verursacht und dadurch eine wirtschaftliche Aufbereitung von Prozessabwasser nicht machbar ist. Ein weiterer Nachteil liegt darin, dass die ausgetragenen Brüden aus Stoffen verschiedener Siedepunkte bestehen.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein Verfahren sowie eine Einrichtung zu schaffen, mit dem und mit der Kondensat mit energetisch kleinem Aufwand und niedersiedende Stoffe schonend vom Prozessabwasser abgetrennt werden.

Die durch die Erfindung erreichten Vorteile sind im wesentlichen darin zu sehen, dass der Destillationsprozess bei niedrigen Temperaturen gefahren werden kann. Ein weiterer Vorteil ist darin zu sehen, dass dank den niedrigen Temperaturen keine chemischen Reaktionen unter den in den Brüden enthaltenen Stoffen stattfinden können. Ein weiterer Vorteil ist darin zu sehen, dass sich der Destillationsprozess nicht überhitzen kann, obwohl dazu keine besonderen Sicherheitsmassnahmen vorgesehen sind. Ein weiterer Vorteil ist darin zu sehen, dass lediglich ein minimaler Steuerungsaufwand notwendig ist.

Im folgenden wird die Erfindung anhand von einer lediglich einen Ausführungsweg darstellenden Zeichnung näher erläutert. Es zeigt:

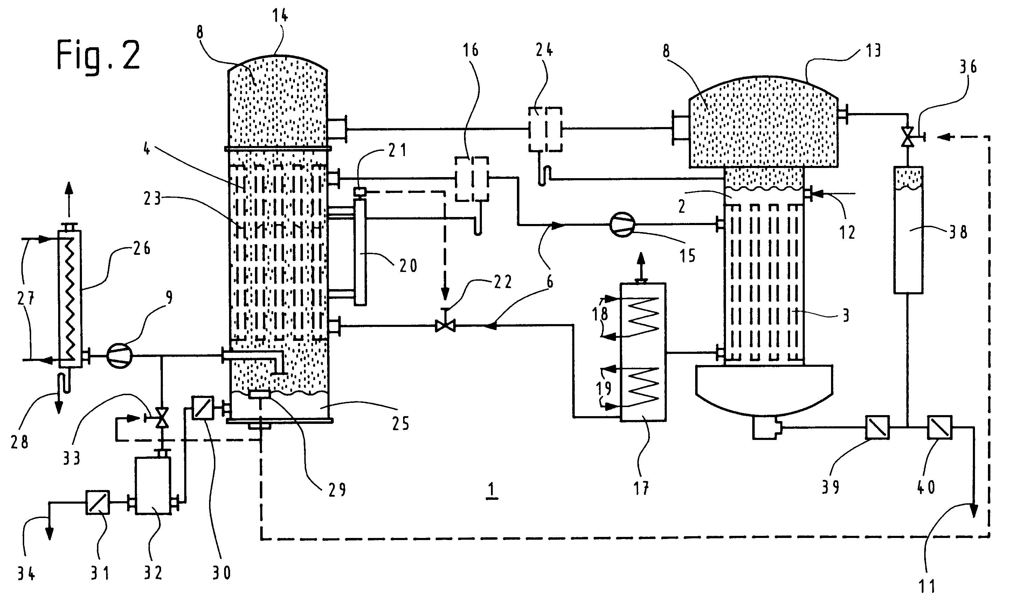

- Fig. 2: einen erfindungsgemässen Vakuumdestillator mit von der Verdampferstufe getrennter Kondensatorstufe.

Der in Fig. 2 dargestellte Vakuumdestillator 1 weist einen Verdampfer 13 mit einem ersten Wärmetauscher 3 und einen ersten Kondensator 14 mit einem zweiten Wärmetauscher 4 auf. Die Wärmetauscher 3;4 sind mit einer zweiten Vakuumpumpe 15, einer zweiten Kondensatfalle 16, einem Puffertank 17 und Leitungen so verbunden, dass ein geschlossener Kreislauf gebildet wird, in dem ein Wärmeträger 6, beispielsweise Methylenchlorid zirkuliert. Die zweite Vakuumpumpe 15 erzeugt im zweiten Wärmetauscher 4 ein Vakuum, wodurch mittels einem Siedevorgang der Wärmeträger 6 seinen Aggregatzustand von flüssig auf gasförmig ändert und dabei umgebende Verdampfungswärme aufnimmt. Der gasförmige Wärmeträger 6 wird von der zweiten Vakuumpumpe 15 gegen Atmosphäre verdichtet. Der Aggregatzustand des Wärmeträgers 6 ändert sich im ersten Wärmetauscher 3 von gasförmig auf flüssig und gibt dabei die beim Verdampfungsvorgang aufgenommene Wärme ab. Im dem ersten Wärmetauscher 3 nachgeschalteten Puffertank 17 wird der flüssige Wärmeträger 6 mittels über einen zweiten und dritten Ein-/Auslass 18;19 geführtem Kühlwasser temperaturstabilisiert. Dann gelangt der flüssige Wärmeträger 6 in den zweiten Wärmetauscher 4. Ein mit 23 bezeichnetes Niveau des flüssigen Wärmeträgers 6 im zweiten Wärmetauscher 4 wird von einer Regeleinrichtung bestehend aus einem, das Niveau 23 des Wärmeträgers 6 überwachendem zweiten Niveauschalter 21 und einem Zuführventil 22 geregelt. Steigt oder sinkt das Niveau 23 des Wärmeträgers 6 im zweiten Wärmetauscher 4, so schliesst oder öffnet der in einem mit dem zweiten Wärmetauscher 4 kommunizierenden Gefäss 20 angeordnete zweite Niveauschalter 21 das Zuführventil 22.

Eine erste, volumetrisch fördernde Vakuumpumpe 9 erzeugt im ersten Kondensator 14 ein Vakuum, das sich über Leitungen und eine erste Kondensatfalle 24 auf den Verdampfer 13 ausbreitet. Über einen ersten Einlass 12 zugeführtes und mittels erstem Wärmetauscher 3 aufgeheiztes Prozessabwasser 2, beispielsweise Prozessabwasser aus photochemischen Prozessen wird dadurch mittels einem Siedevorgang in Brüden 8 und über einen ersten Auslass 11 ausgetragene Eindampfungsrückstände aufgetrennt. Durch die Saugwirkung des im ersten Kondensator 14 herrschenden Vakuums gelangen die Brüden 8 in den ersten Kondensator 14 und durchströmen dort den zweiten Wärmetauscher 4, der die Brüden 8 soweit abkühlt, dass sich ein Kondensat 25, beispielsweise Wasser am Boden des ersten Kondensators 14 sammelt. Tiefer als das Kondensat 25 siedende Stoffe werden im gasförmigen Zustand von der ersten Vakuumpumpe 9 abgesogen, gegen Atmosphäre verdichtet und einem zweiten Kondensator 26 zugeleitet. Mittels über einen ersten Ein-/Auslass 27 geführtem Kühlwasser werden die niedersiedenden Stoffe weiter abgekühlt und über einen dritten Auslass 28 ausgetragen.

Zur Austragung des Kondensats 25 sind ein erster Niveauschalter 29, eine dritte und vierte Rückschlagklappe 30;31, eine erste Austragsschleuse 32, ein erstes Steuerventil 33 und ein zweiter Auslass 34 vorgesehen. Erreicht das Kondensat 25 im ersten Kondensator 14 ein vorherbestimmtes Niveau, so steuert der erste Niveauschalter 29 das erste Steuerventil 33 derart, dass das Vakuum der ersten Vakuumpumpe 9 auf die erste Austragsschleuse 32 geleitet wird. Die in Richtung erste Austragsschleuse 32 durchgängige dritte Rückschlagklappe 30 gibt den Weg für das Kondensat 25 frei, welches mittels dem Vakuum in die erste Austragsschleuse 32 gesogen wird. Nach dem Füllvorgang wird das erste Steuerventil 33 in die Ausgangslage gebracht, wodurch das Vakuum der ersten Vakuumpumpe 9 wieder auf den ersten Kondensator 14 einwirkt. Danach wird der Inhalt der ersten Austragsschleuse 32 über die in Richtung zweiter Auslass 34 durchgängige vierte Rückschlagklappe 32 und den zweiten Auslass 34 ausgetragen.

Erreicht das Kondensat 25 im ersten Kondensator 14 ein vorherbestimmtes Niveau, so steuert der erste Niveauschalter 29 nicht nur das erste Steuerventil 33 sondern gleichzeitig ein zweites Steuerventil 36, welches die Austragung der Eindampfungsrückstände über den ersten Auslass 11 steuert. Die Vakuumseite einer zweiten Austragsschleuse 38 wird dabei mittels dem zweiten Steuerventil 36 gegen Atmosphäre geschaltet, so dass sich der aus Eindampfungsrückständen bestehende Inhalt der zweiten Austragsschleuse 38 über eine in Richtung erster Auslass 11 durchgängige zweite Rückschlagklappe 40 entleeren kann. Nach dem Austragungsvorgang schaltet das zweite Steuerventil 36 die Vakuumseite der zweiten Austragsschleuse 38 gegen das Vakuum des Verdampfers 13, wodurch am Boden des Verdampfers 13 befindliche Eindampfungsrückstände über eine in Richtung zweite Rückschlagklappe 40 durchgängige erste Rückschlagklappe 39 in die zweite Austragsschleuse 38 gesogen werden. Der Eindampfungsgrad im Verdampfer 13 wird durch den volumetrischen Inhalt der ersten Austragsschleuse 32 und der zweiten Austragsschleuse 38 bestimmt. Weist beispielsweise die erste Austragsschleuse 32 einen Inhalt von 10 Litern und die zweite Austragsschleuse 38 einen Inhalt von 1 Liter auf, so wird das Prozessabwasser 2 im Verhältnis von 1:10 im Verdampfer 13 konzentriert.

## Patentansprüche

1. Verfahren zum Aufbereiten von Prozessabwasser (2) mittels Vakuumdestillation mit indirekter Wärmerückgewinnung, wobei unter einem ersten Vakuum mittels einem Siedevorgang das Prozessabwasser (2) in Eindampfungsrückstände und in Brüden (8) aufgetrennt wird und der Aggregatzustand der Brüden (8) durch Wärmeentzug von gasförmig auf flüssig geändert wird und die dabei frei werdende Wärme mittels einem Wärmeträger (6) dem Prozessabwasser (8) zugeführt wird,
dadurch gekennzeichnet,
dass durch den Wärmeentzug von den Brüden (8) ein Kondensat (25) abgetrennt wird,
dass tiefer als das Kondensat (25) siedende Stoffe vom ersten Vakuum abgesogen und gegen Atmosphäre verdichtet werden,
dass der Aggregatzustand des Wärmeträgers (6) unter einem zweiten Vakuum mittels einem Siedevorgang von flüssig auf gasförmig geändert wird und dabei den Brüden (8) Wärme entzogen wird und
dass der gasförmige Wärmeträger (6) gegen Atmosphäre verdichtet und sein Aggregatzustand von gasförmig auf flüssig geändert wird und die dabei frei werdende Wärme dem Prozessabwasser (2) zugeführt wird.

2. Verfahren nach Anspruch 1,
dadurch gekennzeichnet,
dass die tiefer als das Kondensat (25) siedenden Stoffe weiter abgekühlt werden und in flüssiger Form vom Kondensat (25) getrennt ausgetragen werden.

3. Verfahren nach Anspruch 1,
dadurch gekennzeichnet,
dass der Eindampfungsgrad des Prozessabwassers (2) durch die ausgetragene Menge des Kondensats (25) und durch die ausgetragene Menge der Eindampfungsrückstände bestimmt wird.

4. Vakuumdestillator (1) zur Durchführung des Verfahrens nach einem der vorhergehenden Ansprüche mit einer Vakuumpumpe (9) sowie mit einem ersten und zweiten Wärmetauscher (3;4), die mit Leitungen und einer Pumpe einen geschlossenen Kreislauf bilden, in dem ein Wärmeträger (6) Wärme von der Kondensatseite nach der Prozessabwasserseite transportiert, wobei
der Vakuumdestillator (1) einen Verdampfer (13) und einen ersten Kondensator (14) aufweist,
eine erste volumetrisch fördernde Vakuumpumpe (9) vorgesehen ist, die im ersten Kondensator (14) ein Vakuum erzeugt, das sich über Leitungen auf den Verdampfer (13) ausbreitet,und
der erste Wärmetauscher (3) im Verdampfer (13) und der zweite Wärmetauscher (4) im ersten Kondensator (14) angeordnet ist,
ist dadurch gekennzeichnet,
dass die Pumpe eine zweite Vakuumpumpe (15) ist.

5. Vakuumdestillator nach Anspruch 4,
dadurch gekennzeichnet,
dass ein zur Abkühlung niedersiedender Stoffe vorgesehener zweiter Kondensator (26) der ersten Vakuumpumpe (9) nachgeschaltet ist.

6. Vakuumdestillator nach Anspruch 4,
dadurch gekennzeichnet,
dass in die Leitungen zwischen Verdampfer (13) und erstem Kondensator (14) eine erste Kondensatfalle (24) geschaltet ist.

7. Vakuumdestillator nach Anspruch 4,
dadurch gekennzeichnet,
dass zur Austragung eines Kondensats (25) aus dem ersten Kondensator (14) eine erste Austragsschleuse (32) vorgesehen ist,

8. Vakuumdestillator nach Anspruch 7,
dadurch gekennzeichnet,
dass die erste Austragsschleuse (32) mittels einem vom Niveau des Kondensats (25) abhängigen ersten Niveauschalter (29), einem ersten Steuerventil (33), einer dritten Rückschlagklappe (30) und einer vierten Rückschlagklappe (31) gesteuert wird.

9. Vakuumdestillator nach Anspruch 4,
dadurch gekennzeichnet,
dass zur Austragung von Eindampfungsrückständen aus dem Verdampfer (13) eine zweite Austragsschleuse (38) vorgesehen ist,

10. Vakuumdestillator nach Anspruch 9,
dadurch gekennzeichnet,
dass die zweite Austragsschleuse (38) mittels dem vom Niveau des Kondensats (25) abhängigen ersten Niveauschalter (29), einem zweiten Steuerventil (36), einer ersten Rückschlagklappe (39) und einer zweiten Rückschlagklappe (40) gesteuert wird.

11. Vakuumdestillator nach den Ansprüchen 7 bis 9,
dadurch gekennzeichnet,
dass der Eindampfungsgrad des Prozessabwassers (2) vom Grössenverhältnis der Inhalte der ersten und zweiten Austragsschleuse (32;38) bestimmt wird.

12. Vakuumdestillator nach Anspruch 7,
dadurch gekennzeichnet,
dass die erste Austragsschleuse (32) einen Inhalt von 10 Litern aufweist.

13. Vakuumdestillator nach Anspruch 9,
dadurch gekennzeichnet,
dass die zweite Austragsschleuse (38) einen Inhalt von 1 Liter aufweist.

14. Vakuumdestillator nach Anspruch 4,
dadurch gekennzeichnet,
dass zwischen der zweiten Vakuumpumpe (15) und dem zweiten Wärmetauscher (4) eine zweite Kondensatfalle (16) und zwischen dem ersten Wärmetauscher (3) und dem zweiten Wärmetauscher (4) ein Puffertank (17) zur Temperaturstabilisierung des Wärmeträgers (6) geschaltet sind.

15. Vakuumdestillator nach Anspruch 4,
dadurch gekennzeichnet,
dass zur Regelung des flüssigen Wärmeträgers (6) im zweiten Wärmetauscher (4) ein von einem Wärmeträgerniveau (23) abhängigen zweiten Niveauschalter (21) und ein Zuführventil (22) vorgesehen sind.

16. Vakuumdestillator nach Anspruch 4,
dadurch gekennzeichnet,
dass der Wärmeträger (6) Methylenchlorid ist.

## Claims

1. Method for the preparation of process effluents (2) by means of vacuum distillation with indirect heat recovery, wherein the process effluents (2) are separated into solid evaporation residues and into vapours (8) by means of a boiling process under a first vacuum and the physical state of the vapours (8) is changed by heat extraction from gaseous to liquid and the heat then liberated is fed to the process effluents (2) by means of a heat carrier (6), characterised thereby, that a condensate (25) us seoarated frin tge vaoiyrs (8) by the heat extraction, that substances having a lower boiling point than the condensate (25) are drawn off by the first vacuum and compressed to atmosphere, that the physical state of the heat carrier (6) is changed from liquid to gaseous by means of a boiling process under a second vacuum and heat is extracted from the vapours (8) in that case and that the gaseous heat carrier (6) is compressed to atmosphere, its physical state is changed from gaseous to liquid and the heat liberated in that case is fed to the process effluents (2).

2. Method according to claim 1, characterised thereby, that the substances having a lower boiling point than the condensate (25) are cooled down further and discharged in liquid form separately from the condensate (25).

3. Method according to claim 1, characterised thereby, that the degree of evaporation of the process effluents (2) is determined by the discharged quantity of the condensate (25) and by the discharged quantity of the solid evaporation residues.

4. Vacuum still (1) for the performance of the method according to one of the preceding claims with a vacuum pump (9) as well as with a first and a second heat exchanger (3, 4), which together with ducts and a pump form a closed circuit, in which a heat carrier (6) transports heat from the condensate side to the process effluent side, wherein the vacuum still (1) comprises an evaporator (13) and a first condenser (14), a first volumetrically conveying vacuum pump (9) is provided, which in the first condenser (14) produces a vacuum which propagates by way of ducts to the evaporator (13) and the first heat exchanger (3) is arranged in the evaporator (13) and the second heat exchanger (4) is arranged in the first condenser (14), characterised thereby, that the pump is a second vacuum pump (15).

5. Vacuum still according to claim 4, characterised thereby, that a second condenser (26) is provided for the cooling of substances of lower boiling point and connnected downstream of the first vacuum pump (9).

6. Vacuum still according to claim 4, characterised thereby, that a first condensate trap (24) is connected into the ducts between the evaporator (13) and the first condenser (14).

7. Vacuum still according to claim 4, characterised thereby, that a first discharge valve (32) is provided for the discharge of a condensate (25) out of the first condenser (14).

8. Vacuum still according to claim 7, characterised thereby, that the first discharge valve (32) is controlled by means of a first surface level switch (29) dependent on the surface level of the condensate (25), a first control valve (33), a third non-return flap (30) and a fourth non-return flap (31).

9. Vacuum still according to claim 4, characterised thereby, that a second discharge valve (38) is provided for the discharge of solid evaporation residues out of the evaporator (13).

10. Vacuum still according to claim 9, characterised thereby, that the second discharge valve (38) is controlled by means of the first surface level switch (29) dependent on the surface level of the condensate (25), a second control valve (36), a first non-return flap (39) and a second non-return flap (40).

11. Vacuum still according to the claims 7 to 9, characterised thereby, that the degree of evaporation of the process effluents (2) is determined by the magnitude ratio of the contents of the first and the second discharge valve (32; 38).

12. Vacuum still according to claim 7, characterised thereby, that the first discharge valve (32) displays a content of 10 litres.

13. Vacuum still according to claim 9, characterised thereby, that the second discharge valve (38) displays a content of 1 litre.

14. Vacuum still according to claim 4, characterised thereby, that a second condensate trap (16) is connected between the second vacuum pump (15) and the second heat exchanger (4) and a buffer tank (17) for the temperature stabilisation of the heat carrier (6) is connected between the first heat exchanger (3) and the second heat exchanger (4).

15. Vacuum still according to claim 4, characterised thereby, that a second surface level switch (21), which is dependent on a heat carrier surface level (23), and a feed valve (22) are provided for the regulation of the liquid heat carrier (6) in the second heat exchanger (4).

16. Vacuum still according to claim 4, characterised thereby, that the heat carrier (6) is methylene chloride.

## Revendications

1. Procédé de traitement d'eaux résiduaires (2) par distillation sous vide avec récupération de chaleur indirecte, selon lequel les eaux résiduaires (2) sont séparées sous un premier vide, grâce à une ébullition, en résidus d'évaporation et en vapeurs (8), les vapeurs (8) passent de l'état gazeux à l'état liquide grâce à une absorption de chaleur et la chaleur qui se dégage alors est amenée par un agent caloporteur (6) vers les eaux résiduaires (2),
caractérisé en ce qu'un condensat (25) est séparé grâce à l'extraction de chaleur à partir des vapeurs (8),
en ce que les substances dont le point d'ébullition est inférieur à celui du condensat (25) sont aspirées par le premier vide et comprimées par rapport à la pression atmosphérique,
en ce que sous un second vide, l'agent caloporteur (6) passe grâce à une ébullition de l'état liquide à l'état gazeux et de la chaleur est alors extraite des vapeurs (8), et
en ce que l'agent caloporteur (6) gazeux est comprimé à la pression atmosphérique, il passe de l'état gazeux à l'état liquide, et la chaleur alors libérée est transmise aux eaux résiduaires (2).

2. Procédé selon la revendication 1, caractérisé en ce que les substances dont le point d'ébullition est inférieur à celui du condensat (25) sont encore refroidies et sont évacuées, séparées du condensat (25), sous une forme liquide.

3. Procédé selon la revendication 1, caractérisé en ce que le degré d'évaporation des eaux résiduaires (2) est défini par la quantité évacuée de condensat (25) et par la quantité évacuée de résidus d'évaporation.

4. Distillateur à vide (1) pour la mise en oeuvre du procédé selon l'une des revendications précédentes, comportant une pompe à vide (9) et un premier et un second échangeur de chaleur (3;4) qui forment avec des conduites et une pompe un circuit fermé dans lequel un agent caloporteur (6) transporte de la chaleur du côté condensat au côté eaux résiduaires, étant précisé
que le distillateur à vide (1) comporte un évaporateur (13) et un premier condenseur (14),
qu'il est prévu une première pompe à vide volumétrique (9) qui génère dans le premier condenseur (14) un vide qui se propage par l'intermédiaire de conduites dans l'évaporateur (13), et
que le premier échangeur de chaleur (3) est disposé dans l'évaporateur (13) tandis que le second échangeur de chaleur (4) est disposé dans le premier condenseur (14),
caractérisé en ce que la pompe est une seconde pompe à vide (15).

5. Distillateur à vide selon la revendication 4, caractérisé en ce qu'un second condenseur (26) prévu pour refroidir les substances à point d'ébullition peu élevé est monté en aval de la première pompe à vide (9).

6. Distillateur à vide selon la revendication 4, caractérisé en ce qu'un premier piège à condensat (24) est prévu dans les conduites entre l'évaporateur (13) et le premier condenseur (14).

7. Distillateur à vide selon la revendication 4, caractérisé en ce qu'un premier sas d'évacuation (32) est prévu pour évacuer un condensat (25) du premier condenseur (14).

8. Distillateur à vide selon la revendication 7, caractérisé en ce que le premier sas d'évacuation (32) est commandé par un premier commutateur de niveau (29) dépendant du niveau du condensat (25), une première soupape de commande (33), un troisième clapet anti-retour (30) et un quatrième clapet anti-retour (31).

9. Distillateur à vide selon la revendication 4, caractérisé en ce qu'un second sas d'évacuation (38) est prévu pour évacuer des résidus d'évaporation de l'évaporateur (13).

10. Distillateur à vide selon la revendication 9, caractérisé en ce que le second sas d'évacuation (38) est commandé par le premier commutateur de niveau (29) dépendant du niveau du condensat (25), une seconde soupape de commande (36), un premier clapet anti-retour (39) et un deuxième clapet anti-retour (40).

11. Distillateur à vide selon les revendications 7 à 9, caractérisé en ce que le degré d'évaporation des eaux résiduaires (2) est défini par la proportion entre les contenus des premier et second sas d'évacuation (32;38).

12. Distillateur à vide selon la revendication 7, caractérisé en ce que le premier sas d'évacuation (32) a un contenu de 10 litres.

13. Distillateur à vide selon la revendication 9, caractérisé en ce que le second sas d'évacuation (38) a un contenu de 1 litre.

14. Distillateur à vide selon la revendication 4, caractérisé en ce qu'un second piège à condensat (16) est disposé entre la seconde pompe à vide (15) et le second échangeur de chaleur (4), et un réservoir tampon (17) est disposé entre le premier échangeur de chaleur (3) et le second échangeur de chaleur (4) pour stabiliser la température de l'agent caloporteur (6).

15. Distillateur à vide selon la revendication 4, caractérisé en ce qu'il est prévu, pour une régulation de l'agent caloporteur (6) liquide dans le second échangeur de chaleur (4), un second commutateur de niveau (21) dépendant d'un niveau d'agent caloporteur (23), et une soupape d'amenée (22).

16. Distillateur à vide selon la revendication 4, caractérisé en ce que l'agent caloporteur (6) est du chlorure de méthylène.
